Europäisches Patentamt

European Patent Office

Office européen des brevets

(11) Numéro de publication: **0 520 844 B1**

# FASCICULE DE BREVET EUROPEEN

(45) Date de publication de fascicule du brevet: **08.03.95**

(51) Int. Cl.6: **B60T 8/36**, B60T 13/68, F16K 31/06

(21) Numéro de dépôt: **92401427.7**

(22) Date de dépôt: **26.05.92**

(54) **Electrovalve pour système d'antiblocage de roues.**

(30) Priorité: **27.06.91 FR 9107940**

(43) Date de publication de la demande:
**30.12.92 Bulletin 92/53**

(45) Mention de la délivrance du brevet:
**08.03.95 Bulletin 95/10**

(84) Etats contractants désignés:
**DE ES FR GB IT**

(56) Documents cités:
**EP-A- 0 215 272**
**EP-A- 0 218 823**
**EP-A- 0 342 091**

(73) Titulaire: **ALLIEDSIGNAL EUROPE SERVICES TECHNIQUES**
**126 rue de Stalingrad**
**F-93700 Drancy (FR)**

(72) Inventeur: **Kervagoret, Gilbert, Bendix Europe Services Techniques,**
**126 rue de Stalingrad**
**F-93700 Drancy (FR)**

(74) Mandataire: **Bentz, Jean-Paul**
**AlliedSignal Europe Services Techniques**
**Service Brevets**
**126, Rue de Stalingrad**
**F-93700 Drancy (FR)**

## Description

La présente invention a pour objet une électrovalve, plus particulièrement destinée à être insérée dans un circuit hydraulique de freinage pour un véhicule automobile, entre un maître-cylindre et les moteurs de frein dans un système d'antiblocage des roues.

Les circuits hydrauliques de freinage avec dispositif d'antiblocage de roues sont connus et comportent typiquement entre la source de liquide de freinage sous pression telle qu'une électropompe ou un maître-cylindre dit "full power" et les moteurs de frein, des électrovalves commandées par un calculateur, permettant d'abaisser la pression dans les moteurs de frein lorsque le calculateur détecte un blocage des roues, et une remontée tempérée en pression dans les moteurs de frein lorsque le calculateur détecte une vitesse de rotation des roues trop importante.

Les électrovalves utilisées dans ces dispositifs d'antiblocage des roues sont généralement des électrovalves à deux positions et fonctionnant en "tout ou rien" et sont génératrices d'une grande consommation d'énergie de la part de l'électropompe dûe à la succession des phases d'admission/détente lors du fonctionnement du dispositif d'antiblocage. On a également proposé d'utiliser des électrovalves proportionnelles, mais lorsque l'on désire minimiser les fuites hydrauliques pour réduire la consommation d'énergie de l'électropompe, il apparaît un phénomène d'hysteresis dans la courbe représentant la pression hydraulique dans les moteurs de frein en fonction de l'effort d'actionnement de l'électrovalve, et donc du courant électrique circulant dans celle-ci, cette hysteresis perturbant la gestion de la pression dans le moteur de frein par le calculateur associé au dispositif d'antiblocage.

On connaît déjà une electrovalve de ce type, et telle que décrite dans le préambule de la revendication 1 par les EP-A-0 215 272 et EP-A-0 342 091.

La présente invention a donc pour but de réaliser une électrovalve pour un dispositif d'antiblocage des roues dont la consommation en énergie soit la plus faible possible, et qui soit simple et de fonctionnement fiable, et qui permette un pilotage précis de la pression dans les moteurs de freins.

On atteint ce but de l'invention en prévoyant une électrovalve notamment destinée à être insérée dans un circuit hydraulique de freinage entre au moins une source de liquide de freinage sous pression et au moins un récepteur de pression dans un système d'antiblocage des roues, comprenant dans un corps, un moyen de piston déplaçable entre une position de repos, où il permet la communication entre la source de fluide sous pression et le récepteur de pression et une position de travail, où il permet la communication entre le récepteur de pression et un réservoir de fluide à basse pression, et comportant des moyens pour appliquer en permanence une force constante sollicitant le moyen de piston vers sa position de repos.

De façon avantageuse, cette force constante est obtenue par l'application d'une pression constante sur une surface constante, en particulier du moyen de piston.

Selon une caractéristique de l'invention, la surface constante est formée sur un tiroir constituant le moyen de piston, sur une section d'une portée de ce tiroir ou sur la différence des sections de deux portées du tiroir.

Par exemple, l'électrovalve de l'invention peut comporter un limiteur de pression propre à fournir la pression constante à partir de la pression de source, ce limiteur comprenant lui-même un second tiroir mobile sous l'effet de la pression de source à l'encontre d'une force exercée par un ressort de rappel, ce ressort étant taré à une valeur telle que ce second tiroir, grâce à son déplacement, échappe à l'effet de la pression de source dès que celle-ci dépasse ladite pression constante.

Il est alors souhaitable que la pression constante soit fixée à une valeur relativement faible, et par exemple comprise entre 5 et 10 bars.

D'autres caractéristiques et avantages de la présente invention ressortiront de la description suivante d'un mode de réalisation donné à titre illustratif mais nullement limitatif, faite en relation avec les dessins annexés sur lesquels :

- La Figure 1 est une vue en coupe longitudinale d'une électrovalve de l'art antérieur, et
- La Figure 2 est une vue en coupe longitudinale d'une électrovalve réalisée conformément à l'invention.

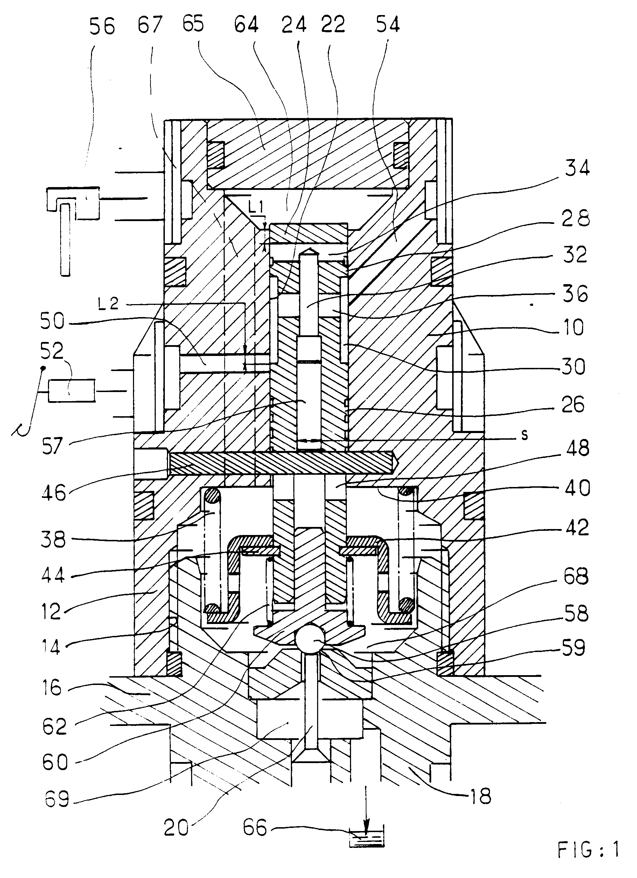

L'électrovalve représentée sur la Figure 1 est constituée d'un corps 10 de forme générale cylindrique, dont l'une des extrémités 12 est munie d'un alésage 14 pour la fixation, par exemple par vissage, de l'embase 16 d'un électroaimant 18 (non représenté) actionnant, sous la commande d'un calculateur, (non représenté) un poussoir 20.

Dans le corps 10 est également formé un alésage 22 dans lequel coulisse de façon quasi étanche un tiroir 24. Le tiroir 24 comporte principalement deux portées 26 et 28 de part et d'autre d'une gorge définissant un volume annulaire 30. Un alésage borgne 32 est formé axialement dans le tiroir 24 et débouche dans un alésage radial 34 formé dans le tiroir 24 au niveau de la portée 28. Un autre alésage radial 36 est formé dans le tiroir 24 au niveau de la gorge annulaire 30.

Le tiroir 24 est rappelé dans sa position de repos par un ressort de rappel 38, prenant d'une part appui sur un épaulement 40 formé dans le corps 10 entre les alésages 22 et 14, et d'autre part sur une coupelle 42 prenant elle-même appui sur une rondelle d'arrêt 44 solidaire du tiroir 24. La position de repos du tiroir 24 est définie par une goupille 46 insérée dans le corps 10 et coopérant avec une lumière oblongue 48 pratiquée radialement dans le tiroir 24.

Dans la position de repos représentée sur la Figure 1, la gorge annulaire 30 du tiroir 24 autorise la communication entre un passage 50 formé dans le corps 10 et relié à une source de fluide sous pression 52 telle qu'un maître-cylindre et un passage 54 formé également dans le corps 10 et relié à un récepteur de pression 56 tel qu'un moteur de frein. Un élément d'obturation 57 dans l'alésage borgne 32 confine le fluide sous pression dans cet alésage, l'alésage 34 étant obturé par la coopération étanche de la portée 28 avec la paroi de l'alésage 22 du corps 10. L'électrovalve permet donc un fonctionnement classique du circuit de freinage du véhicule ainsi équipé, pour des freinages ne nécessitant pas l'intervention du dispositif d'antiblocage des roues.

Lorsque le calculateur détecte l'imminence du blocage d'une roue, il commande l'excitation de l'électroaimant 18. Le poussoir 20 vient alors en butée contre une bille 58 solidaire d'un guide 60 coulissant dans l'alésage 32 du tiroir 24, et sollicité vers le poussoir 20 par un ressort de rappel 62 disposé entre un épaulement du guide 60 et la rondelle d'arrêt 44. La bille 58 constitue l'élément mobile d'un clapet à bille qui coopère avec un siège de clapet 59 formé sur l'embase 16 de l'électroaimant 18 coaxialement au poussoir 20. Le clapet 58-59 est ainsi fermé au repos, c'est-à-dire hors des phases d'antiblocage, pour isoler de façon étanche l'électroaimant des circuits internes de l'électrovalve qui communiquent avec le circuit de freinage.

Lorsque l'électroaimant 18 est excité, le poussoir 20 vient d'abord solliciter la bille 58 et le guide 60 à l'encontre du ressort 62 jusqu'à ce que le guide 60 vienne en butée contre le tiroir 24, puis ce dernier est également sollicité (vers le haut sur la Figure 1) à l'encontre du ressort 38. Dans ce mouvement, la portée 26 du tiroir 24 vient d'abord obturer le passage 50, interdisant ainsi la fourniture de fluide sous pression au récepteur 56, puis la portée 28 du tiroir 24 est déplacée suffisamment pour que l'alésage 34 soit découvert et débouche dans une chambre 64 formée à l'extrémité du corps 10 opposée à celle qui reçoit l'électroaimant 18, et fermée par un bouchon 65. La chambre 64 est reliée par un perçage 67 pratiqué dans le corps 10 à l'espace annulaire 68 autour de la bille 58 et du guide 60, et à l'espace annulaire 69 autour du poussoir 20 lorsqu'il soulève la bille 58 de son siège 59 lors de l'excitation de l'électroaimant. L'espace annulaire 69 est lui-même en communication avec un réservoir de fluide sous basse pression 66.

Le récepteur de pression 56 communique donc, lorsque l'électroaimant 18 est excité, avec le réservoir à basse pression 66, via le passage 54, la gorge annulaire 30, l'alésage radial 36, l'alésage axial 32, l'alésage radial 34, la chambre 64, le perçage 67, et les espaces annulaires 68 et 69, l'alésage axial 32 étant par ailleurs obturé par l'élément 57 comme on l'a vu plus haut. La pression dans le récepteur de pression 56 peut alors s'abaisser, jusqu'à ce que le calculateur détecte une vitesse de rotation trop importante dans la roue associée au récepteur 56. Le calculateur commande alors la désexcitation de l'électroaimant 18, ce qui permet au tiroir 24 de revenir vers sa position de repos sous l'effet du ressort de rappel 38. Le récepteur de pression 56 est alors isolé du réservoir à basse pression 66, et relié à la source de liquide sous pression 52. De tels cycles de baisse et de remontée en pression sont ainsi répétés jusqu'à ce que le véhicule s'arrête ou que la pression fournie par la source de pression 52 baisse, faisant ainsi disparaître le risque de blocage des roues.

Dans une électrovalve telle qu'elle vient d'être décrite et dans son fonctionnement, il est évidemment important de minimiser les fuites de liquide de freinage. Il faut donc que le tiroir 24 obture le passage 50 avant qu'il n'ouvre le passage 34 pour éviter que la source de pression 52 ne débite directement dans le réservoir à basse pression 66. C'est-à-dire qu'il faut prévoir un tiroir à recouvrement positif, la longueur de recouvrement étant définie par la course L du tiroir, avec L = L1 - L2, L1 étant la course d'ouverture de l'alésage 34 dans la chambre 64, et L2 étant la course d'obturation du passage 50 dans le volume annulaire 30.

On a vu plus haut que les mouvements du tiroir 24 sont commandés dans un sens par le poussoir 20 de l'électroaimant 18, et dans l'autre sens par le ressort de rappel 38. Il s'ensuit que, lorsqu'il est excité, l'électroaimant dépense une certaine quantité d'énergie pour vaincre la force du ressort 38, croissante en fonction de la raideur de celui-ci à mesure que le tiroir parcourt la distance L. Il s'ensuit donc une hysteresis de la courbe donnant la pression du liquide de freinage dans le récepteur 56, et dans le passage 54, en fonction de l'effort exercé par le poussoir 20 de l'électroaimant sur le tiroir 24 à l'encontre du ressort 38.

EP 0 520 844 B1

Il a été constaté que cette hysteresis de pression dûe aux effets conjugués du recouvrement positif sur la longueur L et de la raideur du ressort 38, rend très imprécis le pilotage de la pression dans les moteurs de frein par la commande des excitations et désexcitations successives de l'électroaimant 18. En effet, l'hysteresis de pression est représentée par le terme RL/s où R est la raideur du ressort 38 et s la section de l'élément 57.

Si R et s sont connus avec précision, il n'en est pas de même de la longueur de recouvrement L, seules ses limites étant fournies par les chaines de côtes et de tolérances.

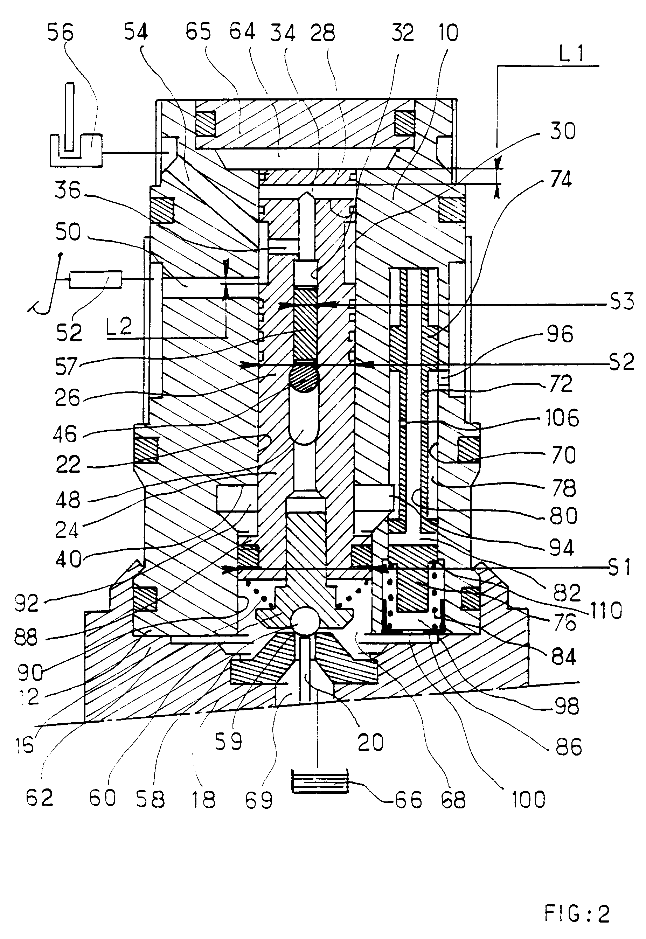

Ces problèmes sont résolus grâce à l'électrovanne réalisée conformément à l'invention, et dont un mode de réalisation a été représenté sur la Figure 2. Sur cette Figure, les éléments identiques à ceux de la Figure 1 portent les mêmes numéros de référence.

Dans sa position de repos représentée sur la Figure 2, l'électrovalve fonctionne comme celle de la Figure 1 pour les freinages qui ne nécessitent pas l'intervention du dispositif d'antiblocage des roues : l'émetteur de pression 52 est relié au récepteur de pression 56 par le passage 50, la gorge annulaire 30 et le passage 54.

Le fonctionnement de l'électrovalve de l'invention en phase d'antiblocage va maintenant être expliqué. On voit sur la Figure 2 qu'un alésage borgne 70 a été pratiqué dans le corps 10, par exemple parallèlement à l'alésage 22.

L'alésage 70 reçoit un tiroir 72 comportant deux portées 74 et 76, de part et d'autre d'une gorge définissant un volume annulaire 78. Le tiroir 72 est lui-même formé avec un alésage axial borgne 80, débouchant dans un alésage radial 82 formé au niveau de la portée 76. Le tiroir 72 est rappelé dans sa position de repos par un ressort de rappel 84 prenant appui d'une part sur un épaulement 110 du tiroir 72 et d'autre part sur le corps 10 ou sur une coupelle 86 solidaire du corps 10, ou par exemple intercalée entre celui-ci et l'embase 16 de l'électroaimant 18.

D'autre part, le tiroir 24 comporte une troisième portée 88 coopérant de façon étanche avec un alésage 90 du corps 10, coaxial à l'alésage 22. Les portées 26 et 88 définissent entre elles et avec les alésages 22 et 90 un volume annulaire 92. Ce volume annulaire 92 est en communication constante, quelles que soient les positions des tiroirs 24 et 72, par un passage 94 dans le corps 10, avec le volume annulaire 78 défini autour du tiroir 72, lequel est lui-même en communication par un passage 96 avec le passage 50 de liaison avec la source de fluide sous pression 52.

Enfin, la portée 76, du tiroir 72 est apte à coopérer avec l'alésage 70 pour obturer l'alésage 82 dans la position de repos du tiroir 72, ou au contraire pour faire déboucher cet alésage dans une chambre 98, où peut par exemple se trouver le ressort de rappel 84, lorsque le tiroir 72 est dans sa position de travail. Cette chambre 98 est en communication par un passage 100 avec l'espace annulaire 68 autour de la bille 58, et l'espace annulaire 69 autour du poussoir 20 de l'électroaimant 18 si celui-ci est excité, lui-même en communication avec le réservoir à basse pression 66.

Le fonctionnement de l'électrovalve hors des phases d'antiblocage est tel qu'on l'a décrit plus haut. L'adjonction du tiroir 74 ne modifie pas cette phase de fonctionnement puisque la pression engendrée par la source de pression 52, si elle est bien transmise au récepteur de pression 56, est également transmise, par le passage 96, le volume annulaire 78 et le passage 94, au volume annulaire 92. Cette pression s'exerce alors sur la section S1 de la portée 88 du tiroir 24 diminuée de la section S2 de la portée 26 du tiroir 24, et sollicite donc le tiroir 24 dans sa position de repos représentée sur la Figure 2.

Par contre, pendant les phases d'antiblocage, lorsque le calculateur décèle une tendance au blocage d'une ou de plusieurs roues, on a vu qu'il excite l'électroaimant 18 pour mettre le moteur de frein 56 alternativement en relation avec la source de pression 52 ou avec le réservoir à basse pression 66.

Lorsque l'électroaimant 18 est excité, le poussoir 20 déplace le tiroir 24 (via la bille 58 et le guide 60) dans sa position active. Pendant cette phase d'excitation de l'électroaimant, l'espace annulaire 68 communique avec l'espace annulaire 69, et donc avec le réservoir à basse pression 66. La pression émise par la source de pression 52 n'est plus transmise au récepteur 56 puisque le tiroir 24 est dans sa position active, par contre elle est transmise, par le passage 96, au volume annulaire 78, et par le passage 94, au volume annulaire 92.

Dans le volume annulaire 78, la pression de la source 52 s'exerce sur la section de la portée 76, un passage 106 ayant été ménagé dans le tiroir 74 pour faire communiquer ce volume 78 avec l'intérieur de l'alésage 80. La section de la portée 76 étant soumise de l'autre côté à la pression du réservoir à basse pression qui règne dans l'espace annulaire 68, le tiroir 74 va se déplacer lorsque la pression P de la source 52 aura atteint une valeur égale à celle qui est nécessaire pour vaincre la force du ressort de rappel 84. Dans ce déplacement, la portée 74 du tiroir 72 va venir obturer le passage 96, interdisant ainsi toute augmentation ultérieure de la pression dans l'espace annulaire 78. On voit donc que cet espace annulaire 78, ainsi que le volume annulaire 92 avec lequel il communique, se trouve à cette pression P. Si la pression

4

dans le volume annulaire 92 diminue, le ressort de rappel déplace le tiroir 72 pour ouvrir le passage 96, faisant ainsi remonter la pression dans l'espace annulaire 78 jusqu'à la valeur P. Si la pression dans le volume annulaire 92 augmente, elle agit sur la section de la portée 76 pour ouvrir le passage 82 vers le réservoir, faisant ainsi décroître la pression dans l'espace annulaire 78 jusqu'à la valeur P.

On voit ainsi que, en fonctionnement, la pression du fluide contenue dans le volume annulaire 92 reste constante, de valeur P, ou ne subit que de très légères variations autour de cette valeur. Ces variations de faible amplitude pourront avantageusement être amorties en choisissant pour le passage 106 dans le tiroir 72 une section assez faible pour ralentir le mouvement de fluide à travers lui, à la manière d'un restricteur de débit.

On voit donc que le volume annulaire 92 est soumis à une pression constante P, déterminée uniquement par la tare du ressort 84. On pourra donc librement choisir ce ressort 84 pour que cette pression P ait toute valeur prédéterminée. Avantageusement, on pourra choisir une valeur de P faible, par exemple entre 5 et 10 bar, alors que la pression émise par la source de pression 52 peut atteindre et même dépasser 100 bar.

Le tiroir 24 est donc soumis à une force F1 produite par la pression constante P s'exerçant sur la surface S1 de la portée 88, diminuée de la surface S2 de la portée 26. Ces surfaces étant évidemment constantes, il s'ensuit que le tiroir 24 est soumis à
une force de rappel constante F1 = P x (S1 - S2), qui peut être elle aussi librement choisie à toute valeur prédéterminée. Il en découle plusieurs avantages importants procurés par l'invention.

Le tiroir 24 est par ailleurs soumis à une force F2 exercée par le poussoir 20 de l'électroaimant 18, et à une force F3 exercée par la pression Q régnant dans le récepteur de pression 56 et s'exerçant sur la section S3 de l'alésage 32 de sorte que

$$Q = \frac{F1 - F2}{S3} = \frac{P(S1-S2) - F2}{S3}$$

l'action exercée par le ressort 62 étant tenue pour négligeable.

On voit donc bien qu'avec l'électrovalve de l'invention, la gestion de la pression Q dans le récepteur de pression 56 par le calculateur est effectuée par la gestion de la force F2 exercée par le poussoir 20 de l'électroaimant 18, la pression Q étant fonction de la force F2, aucun terme n'introduisant une hysteresis quelconque dans cette fonction.

En effet, on a remplacé l'action d'un ressort sur le tiroir par celle d'une pression constante, qu'on peut assimiler à celle d'un ressort de raideur nulle. Le terme d'hysteresis RL/S3 est donc nul quelle que soit la valeur de L. On peut donc librement fixer les limites de L pour minimiser ou même annihiler les fuites de fluide, avec les conséquences qui suivent. La force de rappel du tiroir étant constante et faible, l'électroaimant 18 pourra être de taille et de consommation électrique réduites.

Les fuites de fluide étant minimes, l'émetteur de pression 52, par exemple une électropompe, pourra également être de taille et de consommation électrique réduites. Les étages électriques et électroniques de commande de l'électroaimant et de l'électropompe peuvent donc être grandement simplifiés et dissiper moins d'énergie. Il s'ensuit donc une réduction importante du coût du dispositif complet d'antiblocage des roues, allié à une plus grande fiabilité et simplicité de fabrication et de fonctionnement.

Bien qu'ayant été décrite en relation avec un mode préféré de réalisation, l'électrovalve de l'invention est susceptible de recevoir de nombreuses variantes qui apparaîtront à l'homme du métier. C'est ainsi par exemple que la force de rappel constante du tiroir principal peut être créée dans une chambre extérieure au corps de l'électrovalve et transmise au tiroir par une aiguille ou un poussoir traversant de façon étanche ce corps. L'étanchéité d'une telle traversée n'est pas critique si elle est réalisée dans le bouchon fermant la chambre en communication avec le réservoir sous basse pression.

On peut également prévoir que le tiroir lui-même traverse le bouchon fermant la chambre reliée au réservoir à basse pression, la pression constante étant appliquée sur la face d'extrémité du tiroir. Ces deux variantes permettent d'utiliser des électrovalves de l'art antérieur en éliminant le ressort de rappel du tiroir et en ne modifiant que le bouchon d'extrémité, et de disposer le tiroir délivrant la pression constante indépendamment de l'électrovalve.

**Revendications**

1. Electrovalve, en particulier pour circuit hydraulique de freinage de véhicule automobile avec dispositif d'antiblocage des roues, l'électrovalve étant disposée entre au moins une source de fluide sous pression (52) et au moins un récepteur de pression (56) et comprenant, dans un corps (10), un moyen de piston déplaçable entre une position de repos, où il permet la communication entre la source de fluide sous pression (52) et le récepteur de pression (56) et une position de travail, où il permet la communication entre le récepteur de pression (56) et un réservoir de fluide à basse pression (66), caractérisée en ce qu'elle comporte des moyens pour appliquer en permanence une force constante sollicitant le moyen de piston vers sa position de repos.

2. Electrovalve selon la revendication 1, caractérisée en ce que lesdits moyens d'application de force comprennent une surface constante et des moyens pour appliquer une pression constante (P) sur cette surface constante.

3. Electrovalve selon la revendication 2, caractérisée en ce que ladite surface constante est une surface constante du moyen de piston.

4. Electrovalve selon la revendication 3, caractérisée en ce que le moyen de piston comprend un premier tiroir (24), la surface constante du moyen de piston étant constituée par la section d'une portée de ce tiroir.

5. Electrovalve selon la revendication 3, caractérisée en ce que le moyen de piston comprend un premier tiroir (24), la surface constante du moyen de piston étant constituée par la différence entre les sections (S1, S2) de deux portées de ce tiroir (24).

6. Electrovalve selon l'un quelconque des revendications 2 à 5, caractérisé en ce que les moyens pour appliquer une pression constante (P) comprennent un limiteur de pression propre à fournir ladite pression constante à partir de la pression de la source.

7. Electrovalve selon la revendication 6, caractérisée en ce que le limiteur de pression comprend un second tiroir (72) mobile sous l'effet de la pression de source à l'encontre d'une force exercée par un ressort de rappel, ce ressort étant taré à une valeur telle que ce second tiroir, grâce à son déplacement, échappe à l'effet de la pression de source dès que celle-ci dépasse ladite pression constante (P).

8. Electrovalve selon la revendication 7, caractérisée en ce que ladite pression contante est comprise entre 5 et 10 bars.

**Claims**

1. Solenoid valve, in particular for a hydraulic braking circuit of a motor vehicle with a wheel antilockup device, the solenoid valve being disposed between at least a pressurized fluid source (52) and at least a pressure receiver (56) and comprising, in a body (10), a piston means which can be displaced between a rest position, in which it permits communication between the pressurized fluid source (52) and the pressure receiver (56), and a work position, in which it permits communication between the pressure receiver (56) and a low-pressure fluid reservoir (66), characterized in that it comprises means for permanently applying a constant force stressing the piston means towards its rest position.

2. Solenoid valve according to Claim 1, characterized in that the said force-application means comprise a constant surface and means for applying a constant pressure (P) to this constant surface.

3. Solenoid valve according to Claim 2, characterized in that the said constant surface is a constant surface of the piston means.

4. Solenoid valve according to Claim 3, characterized in that the piston means comprises a first slide valve (24), the constant surface of the piston means consisting of the cross-section of a bearing surface of this slide valve.

5. Solenoid valve according to Claim 3, characterized in that the piston means comprises a first slide valve (24), the constant surface of the piston means consisting of the difference between the cross-sections (S1, S2) of two bearing surfaces of this slide valve (24).

6. Solenoid valve according to any one Claims 2 to 5, characterized in that the means for applying a constant pressure (P) comprise a pressure limiter capable of supplying the said constant pressure starting from the pressure of the source.

7. Solenoid valve according to Claim 6, characterized in that the pressure limiter comprises a second slide valve (72) which can move under the effect of the source pressure against a force exerted by a return spring, this spring being calibrated to a value such that this second slide valve, by virtue of its displacement, escapes the effect of the source pressure as soon as the latter exceeds the said constant pressure (P).

8. Solenoid valve according to Claim 7, characterized in that the said constant pressure (P) is between 5 and 10 bar.

**Patentansprüche**

1. Elektroventil, insbesondere für einen hydraulischen Bremskreis eines Kraftfahrzeugs mit einer Rad-Antiblockiervorrichtung, wobei das Elektroventil zwischen wenigstens einer Druckfluidquelle (52) und wenigstens einem Druckaufnehmer (56) angeordnet ist und in einem Körper (10) ein Kolbenmittel enthält, das zwischen einer Ruhestellung, in der es die Verbindung zwischen der Druckfluidquelle (52) und dem Druckaufnehmer (56) ermöglicht, und einer Arbeitsstellung verstellbar ist, in der es die Verbindung zwischen dem Druckaufnehmer (56) und einem Niederdruckfluidvorratsbehälter (66) ermöglicht, dadurch gekennzeichnet, daß es Mittel zum permanenten Anlegen einer konstanten Kraft enthält, die das Kolbenmittel in seine Ruhestellung beaufschlagt.

2. Elektroventil nach Anspruch 1, dadurch gekennzeichnet, daß die Mittel zum Anlegen einer Kraft eine konstante Fläche sowie Mittel enthalten, um auf diese konstante Fläche einen konstanten Druck (P) aufzubringen.

3. Elektroventil nach Anspruch 2, dadurch gekennzeichnet, daß die konstante Fläche eine konstante Fläche des Kolbenmittels ist.

4. Elektroventil nach Anspruch 3, dadurch gekennzeichnet, daß das Kolbenmittel einen ersten Schieber (24) enthält, wobei die konstante Fläche des Kolbenmittels durch den Querschnitt eines Auflagers dieses Schiebers gebildet ist.

5. Elektroventil nach Anspruch 3, dadurch gekennzeichnet, daß das Kolbenmittel einen ersten Schieber (24) enthält, wobei die konstante Fläche des Kolbenmittels durch den Unterschied zwischen den beiden Querschnitten (S1, S2) der beiden Auflager des Schiebers (24) gebildet ist.

6. Elektroventil nach einem der Ansprüche 2 bis 5, dadurch gekennzeichnet, daß die Mittel zum Anlegen eines konstanten Drucks (P) einen Druckbegrenzer enthalten, der dafür ausgelegt ist, den konstanten Druck ausgehend von dem Druck der Quelle bereitzustellen.

7. Elektroventil nach Anspruch 6, dadurch gekennzeichnet, daß der Druckbegrenzer einen zweiten Schieber (72) enthält, der unter der Wirkung des Drucks der Quelle entgegen einer von einer Rückstellfeder ausgeübten Kraft beweglich ist, wobei diese Feder einen solchen Wert aufweist, daß dieser zweite Schieber aufgrund seiner Verstellung nicht von dem Druck der Quelle erfaßt wird, sobald dieser den konstanten Druck (P) überschreitet.

8. Elektroventil nach Anspruch 7, dadurch gekennzeichnet, daß der konstante Druck zwischen 5 und 10 Bar liegt.

FIG:1

FIG:2